# EUROPÄISCHE PATENTSCHRIFT

(11) **EP 1 606 985 B1**
(45) Veröffentlichungstag und Bekanntmachung des Hinweises auf die Patenterteilung: **13.11.2013**
(21) Anmeldenummer: 05104875.9
(22) Anmeldetag: 03.06.2005
(51) Int. Cl.: A01B 59/06

(54) **Land-, forst- und gartenwirtschaftliche Maschine**
Machine for agriculture, gardening and forestry
Machine agricole, forestière ou de jardinage

(30) Priorität: 15.06.2004 DE 102004028642
(43) Veröffentlichungstag der Anmeldung: 21.12.2005
(73) Patentinhaber: John Deere Fabriek Horst B.V., 5961 PT Horst (NL)
(72) Erfinder: Hiddema, Joris, 5925 NB Blerick (NL)
(74) Vertreter: Holst, Sönke

(56) Entgegenhaltungen:
- FR-A- 2 254 176
- FR-A- 2 283 261
- US-A- 1 046 559
- US-A- 4 828 043
- US-B1- 6 343 661

## Beschreibung

Die Erfindung betrifft eine land-, forst- oder gartenwirtschaftliche Maschine mit einem Parallelogrammgestänge, das ein erstes und ein zweites Parallelogramm mit einem ersten gemeinsamen Lenker umfasst, wobei ein erster Teil des ersten gemeinsamen Lenkers eine Seite des ersten Parallelogramms und ein zweiter Teil des ersten gemeinsamen Lenkers eine Seite des zweiten Parallelogramms bildet.

Im Stand der Technik sind land-, forst- oder gartenwirtschaftliche Maschinen bekannt, die ein Parallelogrammgestänge aufweisen, mit dem Arbeitsgeräte, wie z.B. ein Spritzgestänge, über dem Boden höhenverstellbar geführt werden. Derartige Parallelogrammgestänge weisen in der Regel gleichlange schwenkbare obere und untere Lenker auf, die beide mit einem ortsfesten Lenker verbunden sind, wobei ein Stellmotor auf einen der schwenkbaren Lenker wirkt.

In FR 2 254 176 A wird ein Gestänge offenbart, welches für den Einsatz an landwirtschaftlichen Maschinen ausgebildet ist. Das Gestänge weist eine erstes und ein zweites Parallelogrammgestänge auf, wobei jedes mehrere Lenker umfasst, die in scherenförmiger Weise miteinander verbunden sind. Die Parallelogrammgestänge sind miteinander verbunden, wobei sich die Lenker des ersten Parallelogrammgestänges in einem rechten Winkel zu den Lenkern des zweiten Parallelogrammgestänges erstrecken. Dadurch wird ermöglicht, dass das Gestänge in einer horizontalen Richtung ein- und ausgefahren werden kann und dabei eine stabile Struktur beibehält. Zum Führen eines Arbeitsgerätes an einer landwirtschaftlichen Maschine in einer über dem Boden höhenverstellbaren Weise ist das in FR 2 254 176 A offenbarte Gestänge gänzlich ungeeignet.

In DE 101 29 552 A1 wird eine landwirtschaftliche Verteilmaschine offenbart, welche mit einem einen Ober- und Unterlenker aufweisenden Parallelogrammgestänge versehen ist, wobei das Parallelogrammgestänge mittig zur Längsachse der Verteilmaschine angeordnet ist und dazu dient, ein Verteilergestänge gegenüber einem Rahmen der Maschine auf und ab zu bewegen.

Eine weitere Maschine wird in dem Prospekt der Firma HARDI offenbart (Druckvermerk: GB/HIA 890351.9-01). Hier werden beidseitig der Maschine, welche eine gezogene Feldspritze darstellt, Parallelogrammgestänge zur beidseitigen Führung eines Spritzgestänges eingesetzt, wobei die Parallelogrammgestänge jeweils über gleichlange schwenkbare obere und untere Lenker verfügen, die beide mit einem ortsfesten Lenker verbunden sind.

Derartige Parallelogrammgestänge haben den Nachteil, dass sie eine große Bauhöhe aufweisen, was zu Einschränkungen hinsichtlich der Positionierung des Gestänges an der Maschine führt. Dies wiederum kann zu ungünstigen Schwerpunktverlagerungen an der Maschine sowie zu eingeschränkten Schwenkwinkeln der Lenker führen. Des Weiteren ist es von Nachteil, die Positionierung eines Gestänges weit hinter dem der Maschine vorzunehmen, da dadurch große Ausschwenkradien in Kauf genommen werden müssen. Aus diesen Gründen, weisen die offenbarten Parallelogrammgestänge relativ kurze schwenkbare Lenker und damit relativ geringe Schwenkradien auf, wodurch beim Anheben und Absenken relativ große Horizontalbewegungen des am Parallelogrammgestänge geführten Anbaugeräts hervorgerufen werden.

Die der Erfindung zugrunde liegende Aufgabe wird darin gesehen, eine land-, forst- oder landwirtschaftliche Maschine der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine land-, forst- oder gartenwirtschaftliche Maschine der eingangs genannten Art mit einem Parallelogrammgestänge versehen, welches im Bereich des ersten Parallelogramms einen ortsfesten Lenker aufweist, wobei der ortsfeste Lenker im Wesentlichen unterhalb eines auf der Maschine befindlichen Tanks angeordnet ist. Dadurch, dass das Parallelogrammgestänge in wenigstens zwei Parallelogramme aufgeteilt ist, können die einzelnen Parallelogramme für sich mit reduzierter Bauhöhe ausgebildet werden, wodurch günstigere Positioniermöglichkeiten des Parallelogrammgestänges an der Maschine geschaffen werden. Gleichzeitig ermöglicht diese Art der Parallelogrammaufteilung den gemeinsamen schwenkbaren Lenker mit einem gegenüber dem Stand der Technik relativ großen Schwenkradius zu versehen, ohne das Parallelogrammgestänge weit über die Maschinenbegrenzung hinausragen zu lassen, wodurch Vorteile bezüglich der Schwerpunkverteilung und geringere Horizontalbewegungen bei gleichzeitig geringen Ausschwenkradien erzielbar sind.

Das Parallelogrammgestänge weist des Weiteren für das erste und zweite Parallelogramm einen zweiten gemeinsamen Lenker auf, wobei ein erster Teil des zweiten gemeinsamen Lenkers eine weitere Seite des ersten Parallelogramms und ein zweiter Teil des zweiten gemeinsamen Lenkers eine weitere Seite des zweiten Parallelogramms bildet, wobei die gemeinsamen Lenker sich kreuzen und einen gemeinsamen Gelenkpunkt aufweisen. Es ist möglich das Parallelogrammgestänge in mehr als zwei Parallelogramme aufzuteilen. Dementsprechend würde das Parallelogrammgestänge mit weiteren gemeinsamen Lenkern, die jeweils zwei Parallelogrammen angehören, versehen sein.

Das Parallelogrammgestänge ist über einen im ersten Parallelogramm gelegenen ortsfesten Lenker mit der Maschine verbunden, beispielsweise mit einem Rahmenteil der Maschine verschweißt oder verschraubt. Vorzugsweise handelt es sich bei dem ortsfesten Lenker um den dem zweiten gemeinsamen Lenker gegenüberliegenden Lenker, wobei auch eine ortsfeste Verbindung des zweiten gemeinsamen Lenkers mit der Maschine möglich wäre, um das Parallelgestänge an die Maschine anzubringen.

Vorzugsweise ist der erste gemeinsame Lenker schwenkbar mit dem ortsfesten Lenker verbunden, so dass durch eine Schwenkbewegung des ersten gemeinsamen Lenkers, um einen am ortsfesten Lenker gelegenen Gelenkpunkt, der zweite gemeinsame Lenker verschoben wird. Bei einer ortsfesten Verbindung des zweiten gemeinsamen Lenkers mit der Maschine würde die Schwenkbewegung des ersten gemeinsamen Lenkers um den gemeinsamen Gelenkpunkt erfolgen und eine Verschiebung des dem zweiten gemeinsamen Lenkers gegenüber gelegenen Lenkers erfolgen.

Die Schwenkbewegung wird vorzugsweise durch einen Stellmotor ausgelöst, der auf den ersten gemeinsamen Lenker wirkt. Vorzugsweise erstreckt sich der Stellmotor zwischen einem an der Maschine ortsfesten Punkt, beispielsweise an einem Rahmenteil oder an einem der ortsfesten Lenker, und dem zu verschwenkenden ersten gemeinsamen Lenker. Der Stellmotor wird dabei über Gelenkpunkte schwenkbar mit dem Lenker bzw. der Maschine verbunden. Um eine bessere Hebelwirkung bzw. eine direktere Kraftübertragung zwischen Stellmotor und Lenker zu erwirken, ist es möglich, den Lenker oder die Maschine mit einem Anlenkblech zu versehen. Dadurch führt der Stellmotor nur geringe Schwenkbewegungen um seine Anlenkpunkte aus. Als Stellmotor eignet sich beispielsweise ein Hydraulikzylinder oder ein elektrisch betriebener Spindelmotor, wobei auch pneumatisch betriebene Motoren einsetzbar sind. Denkbar ist es auch, das Parallelogrammgestänge manuell zu verschwenken, wobei dann beispielsweise eine entsprechende Einrastvorkehrung für einen der Lenker vorgesehen sein könnte.
Im Bereich des zweiten Parallelogramms weist das Parallelogrammgestänge einen Lenker auf, der mit einem Anbaugerät verbunden ist. Dieser Lenker bildet zusammen mit einem Teil des ersten und des zweiten gemeinsamen Lenkers sowie mit einem dem Teil des ersten Lenkers gegenüberliegenden Lenker das zweite Parallelogramm. Durch Verschwenken des ersten gemeinsamen Lenkers kann das Anbaugerät unter Beibehalten eines vorgebbaren Positionsniveaus angehoben bzw. abgesenkt werden.

In einer möglichen Ausgestaltung der Erfindung ist die Maschine als Fahrzeug ausgebildet, wobei das Fahrzeug einen Rahmen und wenigstens eine Achse aufweist. Vorzugsweise ist das Parallelogrammgestänge derart angeordnet, dass die Achse zwischen dem ortsfesten Lenker und dem Anbaugerät gelegen ist. Dadurch können Vorteile, wie eine günstige Schwerpunktlage des Anbaugeräts bezüglich des Fahrzeugs und günstige Hebelverhältnisse um die Fahrzeugachse erzielt werden. Je weiter die ortsfeste Anlenkung hinter die Achse verlagert wird umso geringer ist die Hebelwirkung um die Fahrzeugachse. Eine geringe Hebelwirkung um die Fahrzeugachse führt zu geringeren Gewichtsschwankungen am Fahrzeug und damit beispielsweise auch zu konstanteren Vertikalkräften an einer Anhängekupplung für das Fahrzeug.

In einer weiteren Ausgestaltung der Erfindung ist das Parallelogrammgestänge derart angeordnet, dass die Achse des Fahrzeugs zwischen dem ersten Parallelogramm und dem Anbaugerät gelegen ist. Dadurch können die eben genannten Vorteile noch weiter ausgebaut werden, da sich das erste Parallelogramm bis unterhalb der Achse absenken lässt und somit der Schwenkwinkel des Parallelogrammgestänges gegenüber herkömmlichen Parallelogrammgestängen deutlich erhöht werden kann. Des Weiteren ist es denkbar, das Parallelogrammgestänge derart anzuordnen, dass das erste Parallelogramm ausgehend vom ersten gemeinsamen Lenker sich nach oben und das zweite Parallelogramm sich entsprechend nach unten erstreckt. Je nach konstruktiven Gegebenheiten und Bedingungen am Fahrzeug können beide Varianten von Vorteil sein, so dass die Erstreckung des ersten Parallelogramms nach unten oder nach oben bzw. die Erstreckung des zweiten Parallelogramms nach oben oder nach unten erfolgen kann.

In einem Ausgestaltungsbeispiel der Erfindung ist die Maschine als Spritze ausgebildet. Dabei kann es sich beispielsweise um eine durch einen landwirtschaftlichen Schlepper gezogene oder auch um eine selbstfahrende Feldspritze handeln. Des Weiteren ist es denkbar, die Maschine als Anbauspritze auszubilden, welche beispielsweise über eine Dreipunktvorrichtung an einen landwirtschaftlichen Schlepper angebaut ist. Ferner sind noch andere Varianten möglich, die Maschine auszubilden. So kann die Maschine beispielsweise als Bodenbearbeitungsmaschine ausgebildet sein, welche ein oder mehrere über ein oder mehrere Parallelogrammgestänge geführte Säeinheiten oder Pflugschare oder dergleichen aufweist. Des Weiteren kann es sich auch um eine Mähmaschine handeln, die ein oder mehrere über Parallelogrammgestänge geführte Mähvorsätze aufweist. Ferner kann es sich auch um einen landwirtschaftlichen Schlepper sowie um ein anderes selbstfahrendes oder auch um ein von einem Schlepper gezogenes landwirtschaftliches Fahrzeug handeln, welches über ein Parallelogrammgestänge verfügt. Das Parallelogrammgestänge kann zum Anbringen eines beliebigen Anbaugeräts, welches in variablen Abständen über den Boden geführt werden soll, eingesetzt werden.

In einem weiteren Ausführungsbeispiel verfügt die Maschine über ein Spritzgestänge bzw. Verteilgestänge, welches über das Parallelogrammgestänge geführt wird. Vorzugsweise wird das Spritzgestänge über zwei parallel angeordnete Parallelogrammgestänge, die sich auf beiden Seiten der Maschine erstrecken geführt, wobei die Parallelogrammgestänge über das Spritzgestänge oder über einen Verbindungsrahmen miteinander verbunden werden. Es ist aber auch denkbar, nur ein Parallelogrammgestänge an der Maschine vorzusehen und dieses beispielsweise mittig zur Maschine anzuordnen und entsprechend stabil auszubilden.

In einem Ausführungsbeispiel ist das Anbaugerät der Maschine vorzugsweise als Spritzgestänge ausgebildet. Das Spritzgestänge kann dabei über den Boden in einer beliebigen voreinstellbaren Höhe verstellt werden, so dass das zu besprühende Pflanzengut den Anforderungen entsprechend bearbeitet werden kann. Alternativ kann das Anbaugerät auch als Verteilgestänge, beispielsweise für Flüssigdünger und dergleichen, ausgebildet sein. Denkbar ist auch der Einsatz eines Gebläsesprühers oder einer Streuvorrichtung als Anbaugerät.

Die Maschine verfügt über einen Tank, der als Vorratsbehälter für zu versprühende Flüssigkeit, Dünger, Streugut, Saatgut etc. dienen kann. Vorzugsweise ist der Tank mit Einbuchtungen versehen, durch die ein Aktionsraum bzw. ein Aktionsradius des Parallelogrammgestänges erweitert wird, so dass die Lenker über einen größeren Schwenkwinkel verschwenkbar sind. Der Tank kann beispielsweise auch als tragende Struktur ausgebildet sein, so dass auf einen Rahmen verzichtet wird und alle an den Rahmen befestigten Anbauteile, wie z. B. das Fahrwerk bzw. die Achse und das Parallelogrammgestänge an den Tank montiert werden. Derartige Ausführungen können insbesondere bei kompakt ausgebildeten Anbauspritzen sinnvoll sein, die direkt an eine Dreipunktanhängung eines Schleppers angehängt werden.

Des Weiteren ist es vorgesehen, die Anordnung des ortsfesten Lenkers im Wesentlichen unterhalb des Tanks vorzunehmen. Dadurch können insbesondere große Schwenkradien ermöglicht und der Schwerpunkt des Parallelogrammgestänges samt Anbaugerät vorteilhaft positioniert werden. Des Weiteren kann der für die Ausbildung des Tanks zur Verfügung stehende Raum oberhalb des Parallelogrammgestänges und insbesondere oberhalb des ersten Parallelogramms optimal genutzt werden, um ein möglichst hohes Tankvolumen zu erzielen und aufwendige Einbuchtungen am Tank zu vermeiden.

Vorzugsweise ist das Parallelogrammgestänge im Wesentlichen vertikal zur Bodenoberfläche verschwenkbar angeordnet und dient im Wesentlichen dazu, ein Anbaugerät oder ein Arbeitsgerät bzw. eine Vorrichtung vertikal zu verschwenken. Es ist aber auch denkbar, das Parallelogrammgestänge horizontal verschwenkbar anzuordnen, so dass entsprechende Anbaugeräte bzw. Arbeitsgeräte oder Vorrichtungen horizontal verschwenkbar sind und über dem Boden in gleichbleibendem Abstand zum Boden jedoch in einem variablen Abstand zur Maschine bewegt werden können. Ein derartiger Einsatz wäre beispielsweise bei Gebläsesprühern nützlich, mit denen in unterschiedlich breit angelegten Pflanzenreihen beidseitig des Fahrzeugs Sprühflüssigkeit versprühbar ist und welche verstellbare Auslassöffnungen aufweisen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer landwirtschaftlichen Maschine mit einem erfindungsgemäßen Parallelogrammgestänge in einer angehobenen Position und
- Fig. 2: eine Seitenansicht der landwirtschaftlichen Maschine aus Figur 1 mit dem Parallelogrammgestänge in einer abgesenkten Position.

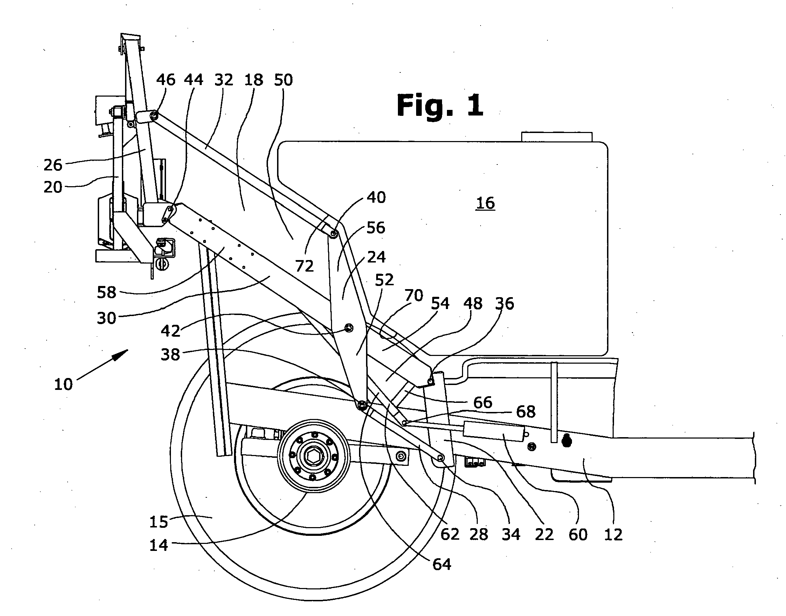

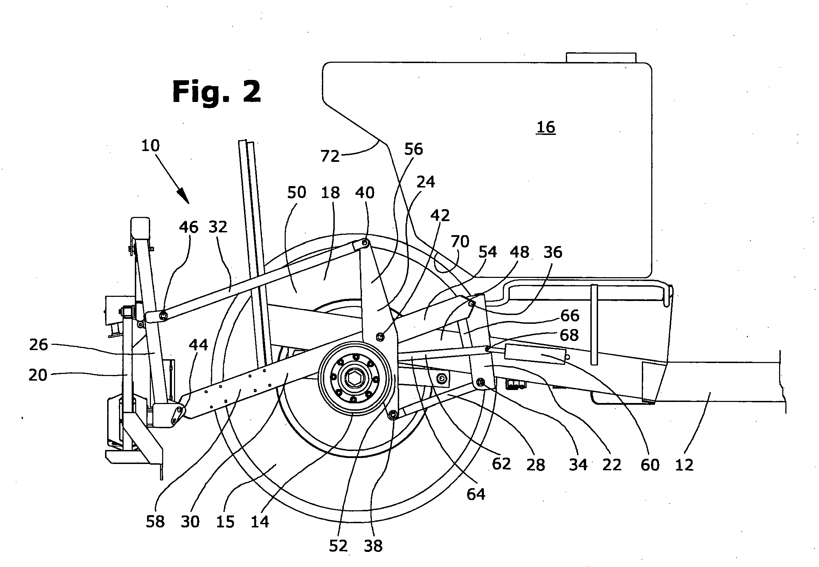

In den Figuren 1 und 2 ist eine landwirtschaftliche Maschine 10 in Form einer landwirtschaftlichen Anhängespritze dargestellt. Anstelle der in diesem Ausführungsbeispiel gewählten Anhängespritze können jedoch auch andere Fahrzeuge entsprechend ausgebildet werden. Die Maschine 10 weist einen Rahmen 12 und eine an einen hinteren Bereich des Rahmens 12 angeordnete Achse 14 mit Rädern 15 auf. Über eine nicht gezeigte Anhängevorrichtung kann die Maschine 10 an ein Zugfahrzeug, beispielsweise an einen landwirtschaftlichen Schlepper, angehängt werden.

Die Maschine 10 ist des Weiteren mit einem Tank 16 versehen, der als Vorratsbehälter für zu versprühende Flüssigkeit dient.

Vom Rahmen 12 aus erstreckt sich ein Parallelogrammgestänge 18, an dessen freien Endbereich ein Anbaugerät 20 in Form eines Spritzgestänges montiert ist. Das Anbaugerät 20 ist über nicht gezeigte Verbindungsleitungen mit dem Tank 16 verbunden und dient zum Ausbringen der zu versprühenden Flüssigkeit.

Das Parallelogrammgestänge 18 verfügt über einen ersten, zweiten und dritten im Wesentlichen vertikal ausgerichteten Lenker 22, 24, 26, sowie über einen sich im Wesentlichen horizontal erstreckenden vierten, fünften und sechsten Lenker 28, 30, 32. Der erste Lenker 22 ist über einen unteren und oberen Gelenkpunkt 34, 36 mit dem vierten Lenker 28 bzw. mit dem fünften Lenker 30 verbunden. Der zweite Lenker 24 ist über einen unteren und oberen Gelenkpunkt 38, 40 mit dem vierten Lenker 28 bzw. mit dem sechsten Lenker 32 verbunden und verfügt des Weiteren über einen mittleren Gelenkpunkt 42, der den zweiten Lenker 24 mit dem fünften Lenker 30 schwenkbar verbindet, wobei die beiden Lenker 24, 30 sich kreuzen. Der dritte Lenker 26 ist über einen unteren und oberen Gelenkpunkt 44, 46 mit dem fünften Lenker 30 bzw. mit dem sechsten Lenker 32 verbunden. Durch die oben beschriebene Verbindung der Lenker 22, 24, 26, 28, 30, 32 miteinander ergibt sich ein Parallelogrammgestänge 18, welches ein erstes und ein zweites Parallelogramm 48, 50 aufweist. Das erste Parallelogramm 48 wird durch die jeweils gegenüberliegend angeordneten Lenker 22 und 24 bzw. 28 und 30 gebildet, wobei ein Teilbereich 52 des zweiten Lenkers 24 und ein Teilbereich 54 des fünften Lenkers 30 jeweils eine Seite des ersten Parallelogramms 48 bilden. Das zweite Parallelogramm 50 wird durch die jeweils gegenüberliegend angeordneten Lenker 24 und 26 bzw. 30 und 32 gebildet, wobei ein verbleibender Teilbereich 56 des zweiten Lenkers 24 und ein verbleibender Teilbereich 58 des fünften Lenkers 30 jeweils eine Seite des zweiten Parallelogramms 50 bilden.

Die Lenker 22, 24, 26, 28, 30, 32 können beispielsweise als Flach-, Winkel- oder Rohrprofile ausgebildet sein, wobei sie entsprechend ihrer statischen und dynamischen Belastung entsprechend unterschiedlich stark ausgebildet sind. In dem in den Figuren 1 und 2 dargestellten Ausführungsbeispiel sind der erste, zweite und fünfte Lenker 22, 24, 30 als stabile Flachprofile ausgebildet, da diese Lenker größeren statischen und dynamischen Belastungen ausgesetzt sind als der als Rohrprofil ausgebildete und lediglich als Umlenkstange wirkende vierte und sechste Lenker 28, 32.

Der mittlere Gelenkpunkt 42 des zweiten Lenkers 24, der den zweiten Lenker 24 mit dem fünften Lenker 30 verbindet, ist derart angeordnet, dass die Teilbereiche 52, 56 des zweiten Lenkers 24 gleich lange Bereiche bilden und dass der Teilbereich 54 des fünften Lenkers 30 in etwa die halbe Länge des Teilbereichs 58 des fünften Lenkers 30 aufweist. Entsprechend den Vorgaben für ein Parallelogramm entspricht die Länge des vierten Lenkers 28 der Länge des Teilbereichs 54 und die Länge des sechsten Lenkers 32 der Länge des Teilbereichs 58 des fünften Lenkers 30 bzw. die Länge des ersten Lenkers 22 der Länge des ersten Teilbereichs 52 und die Länge des dritten Lenkers 26 der Länge des Teilbereichs 56 des zweiten Lenkers 24, wobei hier stets die wirksame Länge gemeint ist, d. h. die Länge eines Lenkers 22, 24, 26, 28, 30, 32 bzw. Teilbereichs 52, 54, 56, 58 die sich zwischen zwei Gelenkpunkten 34, 36, 38, 40, 42, 44, 46 eines Lenkers 22, 24, 26, 28, 30, 32 bzw. Teilbereichs 52, 54, 56, 58 ergibt.

Des Weiteren ist ein Stellmotor 60 vorgesehen, der sich zwischen dem Rahmen 12 und einer Anlenkvorrichtung 62 erstreckt. Die Anlenkvorrichtung 62 ist fest mit dem fünften Lenker 30 verbunden und dient zur Einleitung der Stellkraft des Stellmotors 60 auf das Parallelogrammgestänge 18. Die Anlenkvorrichtung 62 ist durch zwei starr mit dem fünften Lenker 30 verbundene Stangen 64, 66 ausgebildet, wobei die Stangen 64, 66 mit dem Lenker 30 ein Dreieck bilden, welches einen Anlenkpunkt 68 für den Stellmotor 60 aufweist. In einer alternativen Ausführungsform kann die Anlenkvorrichtung 62 beispielsweise als dreieckförmiges Blech ausgebildet sein, welches an einer seiner Kanten mit dem Lenker 30 verschweißt wird.

Der Stellmotor 60 ist in Form eines Hydraulikzylinders ausgebildet und wird über eine nicht gezeigte Hydraulikansteuerung zum Heben und Senken des Parallelogrammgestänges 18 angesteuert.

Der erste Lenker 22 ist ortsfest mit dem Rahmen 12 verbunden, hingegen die übrigen Lenker 24, 26, 28, 30, 32 verschwenkbar über die Gelenkpunkte 34, 36, 38, 40, 42, 44, 46 in der oben beschriebenen Weise miteinander verbunden sind. Der dritte Lenker 26 ist mit dem Anbaugerät 20 verbunden. Durch Ausfahren und Einfahren des Stellmotors 60 wird der fünfte Lenker 30 verschwenkt und das Parallelogrammgestänge 18 um die Gelenkpunkte 34, 36 angehoben bzw. abgesenkt. Dadurch, dass die Lenker 22, 24, 26, 28, 30, 32 bzw. Teilbereiche 52, 54, 56, 58 in ihrer Länge aufeinander abgestimmt sind, wird das Anbaugerät 20 stets in gleichbleibend paralleler Stellung zum Boden verschoben, d. h. angehoben bzw. abgesenkt.

Die Befestigung des ersten Lenkers 22 erfolgt unterhalb des Tanks 16 und in Richtung der Anhängung der Maschine vor der Achsanordnung 14. Die Befestigung des ersten Lenkers 22 am Rahmen 12 ist dabei so gewählt, dass das erste Parallelogramm zwischen Achsanordnung 14 und erstem Lenker 22 vollständig abgesenkt werden kann, so dass sich die in Figur 2 dargestellte Position des Parallelogrammgestänges 18 einstellt und der Teilbereich 52 des zweiten Lenkers 24 bis unmittelbar vor die Achsanordnung 14 bzw. der Teilbereich 58 des fünften Lenkers bis unmittelbar über die Achsanordnung 14 abgesenkt bzw. verschwenkt wird. Die Anordnung eines derartigen Parallelogrammgestänges ermöglicht es, die Platzeinsparung gegenüber herkömmlichen Parallelogrammgestängen zugunsten eines größeren Tanks 16 auszunutzen. Vorzugsweise ist der Tank derart ausgebildet, dass Einbuchtungen 70, 72 vorgesehen sind, die der äußeren Form des Parallelogrammgestänges angepasst sind, um den durch die Aufteilung des Parallelogrammgestänges 18 in zwei Parallelogramme 48, 50 entstehenden Raumvorteil optimal ausnutzen zu können. Ein entsprechend weit vorn am Rahmen 12 positionierter erster Lenker 22 und ein dadurch entsprechend lang ausgebildeter fünfter Lenker 30 wirken sich positiv hinsichtlich einer Schwerpunktlage der Maschine 10 sowie einer Horizontalverschiebung des Anbaugerätes 20 beim Heben und Senken des Parallelogrammgestänges aus.

Vorzugsweise ist die in den Figuren 1 und 2 dargestellte landwirtschaftliche Maschine an beiden Fahrzeugseiten mit einem Parallelogrammgestänge (18) ausgerüstet, welche über eine entsprechende Querverbindung (nicht gezeigt) am dritten Lenker 26, beispielsweise eine Querstrebe oder ein Verbindungsrahmen, miteinander verbunden sind.

## Patentansprüche

1. Land-, forst- oder gartenwirtschaftliche Maschine mit einem Parallelogrammgestänge (18), das ein erstes und ein zweites Parallelogramm (48, 50) mit einem ersten gemeinsamen Lenker (30) umfasst, wobei ein erster Teil (54) des ersten gemeinsamen Lenkers (30) eine Seite des ersten Parallelogramms (48) und ein zweiter Teil (58) des ersten gemeinsamen Lenkers (30) eine Seite des zweiten Parallelogramms (50) bildet, **dadurch gekennzeichnet, dass** das Parallelogrammgestänge (18) im Bereich des ersten Parallelogramms (48) einen ortsfesten Lenker (22) aufweist, wobei der ortsfeste Lenker (22) im Wesentlichen unterhalb eines auf der Maschine (10) befindlichen Tanks (16) angeordnet ist.

2. Land-, forst- oder gartenwirtschaftliche Maschine nach Anspruch 1, **dadurch gekennzeichnet, dass** das erste und zweite Parallelogramm (48, 50) einen zweiten gemeinsamen Lenker (24) aufweisen, wobei ein erster Teil (52) des zweiten gemeinsamen Lenkers (24) eine weitere Seite des ersten Parallelogramms (48) und ein zweiter Teil (56) des zweiten gemeinsamen Lenkers (24) eine weitere Seite des zweiten Parallelogramms (50) bildet und wobei die gemeinsamen Lenker (24, 30) sich kreuzen und einen gemeinsamen Gelenkpunkt (42) aufweisen.

3. Land-, forst- oder gartenwirtschaftliche Maschine nach einem oder mehreren der vorhergehenden Ansprüche, **dadurch gekennzeichnet, dass** der erste gemeinsame Lenker (30) schwenkbar mit dem ortsfesten Lenker (22) verbunden ist.

4. Land-, forst- oder gartenwirtschaftliche Maschine nach einem oder mehreren der vorhergehenden Ansprüche, **dadurch gekennzeichnet, dass** ein Stellmotor (60) enthalten ist, welcher auf den ersten gemeinsamen Lenker (30) wirkt.

5. Land-, forst- oder gartenwirtschaftliche Maschine nach einem oder mehreren der vorhergehenden Ansprüche, **dadurch gekennzeichnet, dass** das Parallelogrammgestänge (18) im Bereich des zweiten Parallelogramms (50) einen Lenker (26) aufweist, der mit einem Anbaugerät (20) verbunden ist.

6. Land-, forst- oder gartenwirtschaftliche Maschine nach einem oder mehreren der vorhergehenden Ansprüche, **dadurch gekennzeichnet, dass** die Maschine (10) als Fahrzeug ausgebildet ist, welches einen Rahmen (12) und wenigstens eine Achse (14) aufweist, und dass die Achse (14) des Fahrzeugs zwischen dem ortsfesten Lenker (22) und dem Anbaugerät (20) gelegen ist.

7. Land-, forst- oder gartenwirtschaftliche Maschine nach einem oder mehreren der vorhergehenden Ansprüche, **dadurch gekennzeichnet, dass** die Achse (14) des Fahrzeugs zwischen dem ersten Parallelogramm (48) und dem Anbaugerät (20) gelegen ist.

8. Land-, forst- oder gartenwirtschaftliche Maschine nach einem oder mehreren der vorhergehenden Ansprüche, **dadurch gekennzeichnet, dass** die Maschine (10) als Spritze ausgebildet ist.

9. Land-, forst- oder gartenwirtschaftliche Maschine nach einem oder mehreren der vorhergehenden Ansprüche, **dadurch .gekennzeichnet, dass** das Anbaugerät (20) ein Spritzgestänge ist.

10. Land-, forst- oder gartenwirtschaftliche Maschine nach einem oder mehreren der vorhergehenden Ansprüche, **dadurch gekennzeichnet, dass** der Tank (16) mit Einbuchtungen (70, 72) versehen ist, die einen Aktionsraum des Parallelogrammgestänges (18) freigeben.

## Claims

1. Machine for agriculture, forestry or gardening with a parallelogram linkage (18) which comprises a first and a second parallelogram (48, 50) having a first common link (30), wherein a first part (54) of the first common link (30) forms one side of the first parallelogram (48) and a second part (58) of the first common link (30) forms one side of the second parallelogram (50), **characterized in that** the parallelogram linkage (18) has a positionally fixed link (22) in the region of the first parallelogram (48), wherein the positionally fixed link (22) is arranged substantially below a tank (16) located on the machine (10).

2. Machine for agriculture, forestry or gardening according to Claim 1, **characterized in that** the first and second parallelograms (48, 50) have a second common link (24), wherein a first part (52) of the second common link (24) forms a further side of the first parallelogram (48), and a second part (56) of the second common link (24) forms a further side of the second parallelogram (50), and wherein the common links (24, 30) intersect and have a common joint point (42).

3. Machine for agriculture, forestry or gardening according to one or both of the preceding claims, **characterized in that** the first common link (30) is pivotably connected to the positionally fixed link (22).

4. Machine for agriculture, forestry or gardening according to one or more of the preceding claims, **characterized in that** the machine contains a servomotor (60) which acts on the first common link (30).

5. Machine for agriculture, forestry or gardening according to one or more of the preceding claims, **characterized in that** the parallelogram linkage (18) has, in the region of the second parallelogram (50), a link (26) which is connected to a mounted implement (20).

6. Machine for agriculture, forestry or gardening according to one or more of the preceding claims, **characterized in that** the machine (10) is designed as a vehicle which has a frame (12) and at least one axle (14), and **in that** the axle (14) of the vehicle is placed between the positionally fixed link (22) and the mounted implement (20).

7. Machine for agriculture, forestry or gardening according to one or more of the preceding claims, **characterized in that** the axle (14) of the vehicle is positioned between the first parallelogram (48) and the mounted implement (20).

8. Machine for agriculture, forestry or gardening according to one or more of the preceding claims, **characterized in that** the machine (10) is designed as a sprayer.

9. Machine for agriculture, forestry or gardening according to one or more of the preceding claims, **characterized in that** the mounted implement (20) is a spray boom.

10. Machine for agriculture, forestry or gardening according to one or more of the preceding claims, **characterized in that** the tank (16) is provided with indentations (70, 72) which open up an action space for the parallelogram linkage (18).

## Revendications

1. Machine agricole, forestière ou de jardinage, comprenant une tringlerie en forme de parallélogramme (18), qui comprend un premier et un deuxième parallélogramme (48, 50) avec un premier bras oscillant commun (30), une première partie (54) du premier bras oscillant commun (30) formant un côté du premier parallélogramme (48) et une deuxième partie (58) du premier bras oscillant commun (30) formant un côté du deuxième parallélogramme (50), **caractérisée en ce que** la tringlerie en forme de parallélogramme (18) présente un bras oscillant fixe (22) dans la région du premier parallélogramme (48), le bras oscillant fixe (22) étant disposé essentiellement en dessous d'un réservoir (16) situé sur la machine (10).

2. Machine agricole, forestière ou de jardinage selon la revendication 1, **caractérisée en ce que** le premier et le deuxième parallélogramme (48, 50) présentent un deuxième bras oscillant commun (24), une première partie (52) du deuxième bras oscillant commun (24) formant un autre côté du premier parallélogramme (48) et une deuxième partie (56) du deuxième bras oscillant commun (24) formant un autre côté du deuxième parallélogramme (50) et les bras oscillants communs (24, 30) se croisant et présentant un point d'articulation commun (42).

3. Machine agricole, forestière ou de jardinage, selon l'une quelconque ou plusieurs des revendications précédentes, **caractérisée en ce que** le premier bras oscillant commun (30) est connecté de manière pivotante au bras oscillant fixe (22).

4. Machine agricole, forestière ou de jardinage, selon l'une quelconque ou plusieurs des revendications précédentes, **caractérisée en ce qu'**un moteur de commande (60) est prévu, lequel agit sur le premier bras oscillant commun (30).

5. Machine agricole, forestière ou de jardinage, selon l'une quelconque ou plusieurs des revendications précédentes, **caractérisée en ce que** la tringlerie en forme de parallélogramme (18) présente, dans la région du deuxième parallélogramme (50), un bras oscillant (26) qui est connecté à un équipement (20).

6. Machine agricole, forestière ou de jardinage, selon l'une quelconque ou plusieurs des revendications précédentes, **caractérisée en ce que** la machine (10) est réalisée sous forme de véhicule qui présente un châssis (12) et au moins un essieu (14), et **en ce que** l'essieu (14) du véhicule est situé entre le bras oscillant fixe (22) et l'équipement (20).

7. Machine agricole, forestière ou de jardinage, selon l'une quelconque ou plusieurs des revendications précédentes, **caractérisée en ce que** l'essieu (14) du véhicule est situé entre le premier parallélogramme (48) et l'équipement (20).

8. Machine agricole, forestière ou de jardinage, selon l'une quelconque ou plusieurs des revendications précédentes, **caractérisée en ce que** la machine (10) est réalisée sous forme de pulvérisateur.

9. Machine agricole, forestière ou de jardinage, selon l'une quelconque ou plusieurs des revendications précédentes, **caractérisée en ce que** l'équipement (20) est une tringlerie de pulvérisation.

10. Machine agricole, forestière ou de jardinage, selon l'une quelconque ou plusieurs des revendications précédentes, **caractérisée en ce que** le réservoir (16) est pourvu de renfoncements (70, 72) qui libèrent un espace d'actionnement de la tringlerie en forme de parallélogramme (18).
